# FASCICULE DE BREVET EUROPEEN

(11) **EP 3 172 464 B1**
(45) Date de publication et mention de la délivrance du brevet: **22.08.2018**
(21) Numéro de dépôt: 15742346.8
(22) Date de dépôt: 25.06.2015
(51) Int. Cl.: F16H 59/02, F16H 59/04

(54) **DISPOSITIF POUR LA COMMANDE D'UNE BOITE DE VITESSES D'UN VEHICULE AUTOMOBILE AU MOYEN D'UN LEVIER DE CHANGEMENT DE VITESSE A ORGANES D'AMORTISSEMENT DE BRUIT**
VORRICHTUNG ZUR STEUERUNG EINES KRAFTFAHRZEUGGETRIEBES MITTELS EINES GETRIEBESCHALTHEBELS MIT GERÄUSCHUNTERDRÜCKUNGSELEMENTEN
DEVICE FOR CONTROLLING A MOTOR VEHICLE GEARBOX BY MEANS OF A GEAR CHANGE LEVER HAVING NOISE REDUCTION MEMBERS

(30) Priorité: 21.07.2014 FR 1457004
(43) Date de publication de la demande: 31.05.2017
(73) Titulaire: PSA Automobiles SA, 78300 Poissy (FR)
(72) Inventeur: POIRRIER, Pascal, F-70290 Champagney (FR); SAILLARD, Laurent, F-90400 Danjoutin (FR); ORHANT, Mathieu, 70400 Hericourt (FR)
(86) Numéro de dépôt international: PCT/FR2015/051711
(87) Numéro de publication internationale: WO 2016/012681

(56) Documents cités:
- DE-A1-102012 008 026
- US-A1- 2012 137 813
- US-B2- 8 522 637

## Description

La présente invention concerne un dispositif pour la commande d'une boîte de vitesses manuelle d'un véhicule, notamment automobile.

De manière connue, un tel dispositif comprend un levier de changement de vitesse qui est monté pivotant par son extrémité inférieure autour d'un point fixe dans un boîtier ou support fixe supportant ce levier, selon une grille de vitesses déterminée.

Le boîtier ou support fixe peut être solidaire du plancher du véhicule entre les deux sièges avant de celui-ci ou implanté dans la planche de bord de ce véhicule.

Le brevet US 8 522 637 décrit un dispositif pour la commande d'une boîte de vitesses d'un véhicule automobile dont le levier de changement de vitesse est équipé d'une gâchette de verrouillage de la marche arrière du véhicule et pouvant être manoeuvré à l'encontre d'un moyen de rappel élastique pour autoriser le levier à engager la marche arrière. La demande de brevet DE 10 2012 008 026 A1 décrit également un tel dispositif, ayant toutes les caractéristiques du préambule de la revendication 1.

Ce levier de changement de vitesse est également équipé d'un organe permettant d'amortir le bruit se produisant lors du retour de ce levier et de sa gâchette à la position de verrouillage de la marche arrière.

Cependant, l'implantation au levier de changement de vitesse de cet organe d'amortissement de bruit conduit à une structure extrêmement complexe du levier, grèvant par conséquent les coûts de fabrication du dispositif de commande externe de la boîte de vitesses.

En outre, l'organe d'amortissement de bruit de ce levier connu n'absorbe pas efficacement les vibrations que produisent un levier lorsqu'il occupe une position de passage d'une vitesse autre que celle de la marche arrière.

La présente invention a pour but de pallier les inconvénients ci-dessus du dispositif connu pour la commande d'une boîte de vitesses d'un véhicule automobile.

A cet effet, selon l'invention, le dispositif pour la commande d'une boîte de vitesses d'un véhicule, notamment automobile, au moyen d'un levier à pommeau de changement de vitesse monté sur un support fixe et équipé d'une part d'une gâchette de verrouillage de la marche arrière pouvant être manoeuvrée à l'encontre d'un moyen de rappel élastique pour autoriser le levier à engager la marche arrière et d'autre part d'au moins un organe d'amortissement de bruit notamment lors du retour du levier et de la gâchette à la position de verrouillage de la marche arrière, est caractérisé en ce que la gâchette est solidaire du levier en étant déplaçable en translation le long de celui-ci vers le pommeau à l'encontre du moyen de rappel élastique de sa position de verrouillage de la marche arrière à sa position autorisant le levier à engager la marche arrière, laquelle gâchette comprend deux parties de gâchette situées respectivement à proximité du support fixe et du pommeau, le levier comprend, solidaires de celui-ci, deux organes d'amortissement de bruit et de vibrations en forme de joints toriques et les deux parties de gâchettes comprennent deux sièges internes tronconiques en appui respectivement sur les deux organes d'amortissement sous l'action du moyen de rappel élastique de sens opposé au pommeau lorsque le levier et la gâchette occupent leur position de verrouillage de la marche arrière.

De préférence, chaque organe d'amortissement est logé dans une gorge du levier en faisant radialement saillie de celle-ci.

Avantageusement, le bord circulaire de chaque gorge du levier, sur lequel est en butée l'organe d'amortissement correspondant sous l'action du moyen de rappel exercée sur le siège interne tronconique en appui sur cet organe, a un diamètre supérieur au diamètre de l'autre bord circulaire de la gorge.

Avantageusement, le moyen de rappel élastique est un ressort hélicoïdal de compression monté coaxialement sur le levier en étant en appui précontraint entre le levier et l'une des deux parties de gâchette.

De préférence, le ressort hélicoïdal de compression est logé dans la partie de gâchette proche du support fixe.

Avantageusement, le ressort hélicoïdal de compression est en appui précontraint entre une bague annulaire d'arrêt solidaire du levier et un épaulement interne de la partie de gâchette proche du support fixe.

La partie de gâchette proche du support fixe comprend, solidaire en translation de cette dernière, une saillie externe venant en appui latéral sur une butée solidaire du support fixe pour interdire l'engagement de la marche arrière et qui peut être soulevée lors du déplacement en translation de la gâchette vers le pommeau et amenée en appui sur la butée par déplacement du levier pour permettre l'engagement de la marche arrière.

L'invention vise également un levier de changement de vitesse pour un véhicule, notamment automobile, comprenant un pommeau à l'une de ses extrémités, une gâchette de verrouillage de la marche arrière et au moins un organe d'amortissement de bruit, et qui est caractérisé en ce que la gâchette est solidaire du levier en étant déplaçable en translation le long de celui-ci vers le pommeau à l'encontre d'un moyen de rappel élastique, laquelle gâchette comprend deux parties de gâchette situées respectivement à proximité du pommeau et à l'opposé de ce dernier, le levier comprend, solidaires de celui-ci, deux organes d'amortissement de bruit et de vibrations en forme de joints toriques et les deux parties de gâchettes comprennent deux sièges internes tronconiques en appui, en position de repos de la gâchette, respectivement sur les deux organes d'amortissement sous l'action du moyen de rappel élastique du sens opposé au pommeau.

L'invention vise enfin un véhicule automobile, qui est caractérisé en ce qu'il est équipé d'un dispositif pour la commande d'une boîte de vitesses au moyen d'un levier à pommeau de changement de vitesse et tel que défini précédemment.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- les figures 1 à 3 représentent en perspective un levier de changement de vitesse pour un véhicule automobile et occupant respectivement une position de point mort, une position d'interdiction de passage de la marche arrière et une position d'autorisation de passage de la marche arrière ;
- la figure 4 est une vue en coupe longitudinale du levier de changement de vitesse des figures 1 à 3 équipé de moyens d'amortissement de bruit et de vibrations et occupant la position de verrouillage en marche arrière ;
- la figure 5 est une vue agrandie de la partie circulaire en V de la figure 4 ;
- la figure 6 est une vue agrandie de la partie circulaire en VI de la figure 4 ;
- les figures 7 et 8 sont des vues semblables à celles des figures 5 et 6 et représentant la gâchette du levier soulevée à sa position permettant l'engagement de la marche arrière du véhicule.

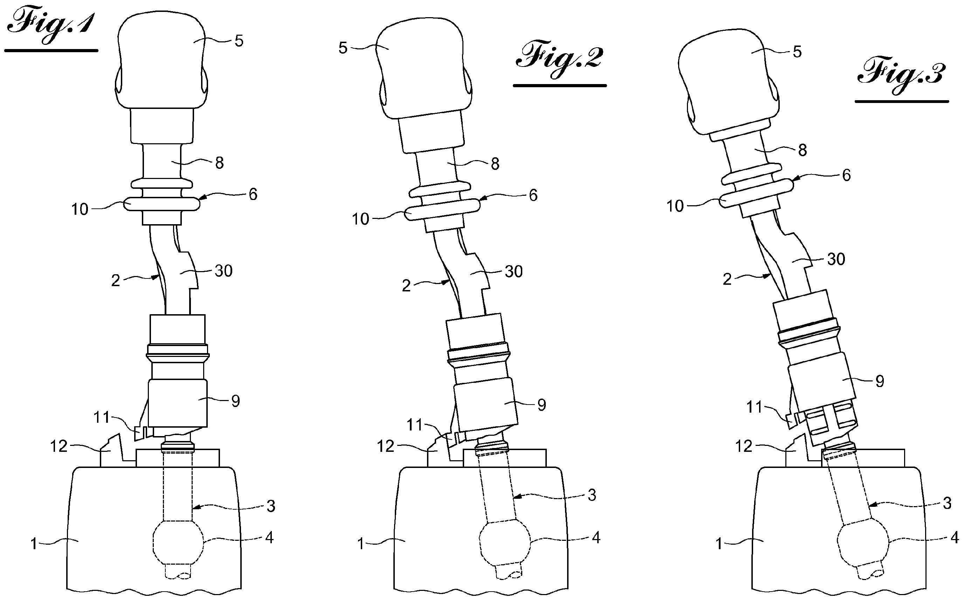

Le dispositif de commande externe d'une boîte de vitesses manuelle d'un véhicule automobile représenté aux figures 1 à 3 comprend un boîtier ou support fixe 1 pouvant être solidaire du plancher du véhicule entre les deux sièges avant de celui-ci et un levier de changement de vitesse 2 supporté par le boîtier fixe 1 en étant monté pivotant par son extrémité inférieure 3 autour d'un point fixe constitué par une rotule 4.

Le levier de changement de vitesse 2 peut être déplacé par son extrémité supérieure comportant un pommeau 5 selon une grille de vitesses déterminée.

La partie d'extrémité inférieure 3 du levier 2 est accouplée à des organes de passage et de sélection de vitesses, non représentés et connus en soi.

La combinaison des déplacements transversaux et longitudinaux du pommeau 5 du levier 2 définit ainsi la grille de vitesses comprenant une ligne de sélection ou de point mort sensiblement transversale et plusieurs lignes de passage sensiblement longitudinales.

La figure 1 représente le levier de changement de vitesse 2 à sa position correspondant à la ligne de point mort.

Le levier de changement de vitesse 2 est équipé d'une gâchette 6 de verrouillage d'accès à la ligne de sélection de marche arrière du véhicule et pouvant être manoeuvrée à l'encontre d'un moyen de rappel élastique, qui sera défini ultérieurement, pour autoriser le déplacement du levier dans les directions transversale et longitudinale de sélection et de passage de la marche arrière.

La figure 2 représente la gâchette 6 du levier de changement de vitesse 2 à une position interdisant l'accès à la ligne de sélection de marche arrière tandis que la figure 3 représente la gâchette 6 à sa position d'engagement de la marche arrière.

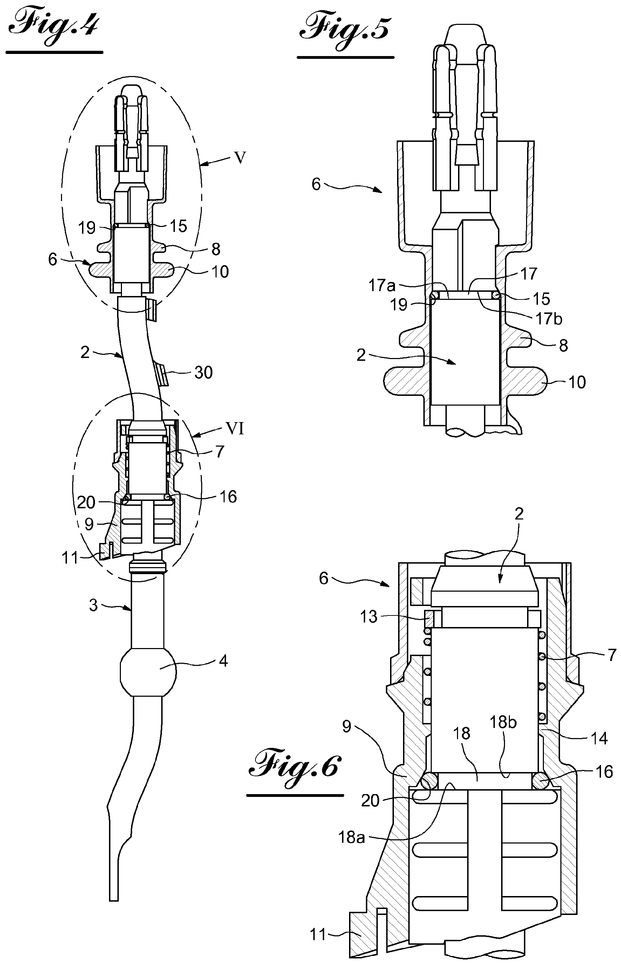

En se référant également aux figures 4 à 8, selon l'invention, la gâchette 6 est solidaire du levier de changement de vitesse 2 en étant déplaçable en translation le long de celui-ci vers le pommeau 5, à l'encontre du moyen de rappel élastique 7, de sa position de verrouillage de la marche arrière à sa position autorisant le levier de changement de vitesse 2 à engager la marcher arrière.

La gâchette 6 comprend deux parties de gâchette 8, 9 axialement espacées l'une de l'autre le long du levier 2 et situées respectivement à proximité du pommeau 5 et du boîtier fixe 1. Les deux parties de gâchette 8,9 sont reliées l'une à l'autre par une partie intermédiaire 30. Dans le cas où le levier de changement de vitesse 2 est monté articulé sur le plancher du véhicule entre les deux sièges avant et occupe une position sensiblement verticale à sa position de point mort, la partie de gâchette 8 est dite supérieure et la partie de gâchette 9 est dite inférieure.

La partie de gâchette supérieure 8 comporte au moins une bague radialement externe 10 pouvant être manuellement saisie par le conducteur pour soulever en translation la gâchette 6 vers le pommeau 5 à l'encontre du moyen de rappel élastique 7 afin de permettre au levier 2 d'engager la marche arrière.

La partie de gâchette inférieure 9 comprend, solidaire en translation de cette dernière, une saillie externe 11 venant en appui latéral sur une butée 12 solidaire de la face supérieure du boîtier fixe 1 pour interdire au levier 2 d'engager la marche arrière comme représenté en figure 2.

En soulevant la gâchette 6 vers le pommeau 5, la partie de gâchette inférieure 9 est également déplacée vers le haut pour dégager la saillie externe 11 de la butée 12 pour permettre l'engagement de la marche arrière comme représenté en figure 3, la saillie externe 11 venant en appui sur la butée 12 sous l'action du moyen de rappel élastique 7.

De préférence, le moyen de rappel élastique 7 est constitué par un ressort hélicoïdal de compression logé dans la partie de gâchette inférieure 9 coaxialement au levier 2 en étant en appui précontraint entre une bague annulaire d'arrêt 13 solidaire du levier 2 et un épaulement interne 14 de la partie de gâchette inférieure 9 situé en-dessous de la bague 13, de manière que le ressort hélicoïdal 7 exerce une force de rappel dirigée vers le bas sur la partie de gâchette inférieure 9 et, par conséquent, sur la gâchette 6.

En variante, le moyen de rappel élastique 7 pourrait être logé dans la partie de gâchette supérieure 8 en étant monté précontraint entre un épaulement interne de cette partie et une bague annulaire d'arrêt solidaire du levier 2 au-dessus de cet épaulement.

Le levier de changement de vitesse 2 comprend deux organes d'amortissement de bruit et de vibrations 15, 16 logés respectivement dans les deux parties de gâchette supérieure 8 et inférieure 9 en étant solidaires du levier 2.

Plus précisément, les deux organes d'amortissement 15, 16 sont en forme de joints toriques logés respectivement dans deux gorges supérieure 17 et inférieure 18 du levier 2 en faisant radialement saillie de celles-ci.

Les deux parties de gâchette 8, 9 comprennent deux sièges internes tronconiques 19, 20 en appui respectivement sur les deux organes d'amortissement 15, 16 sous l'action du moyen de rappel élastique 7 de sens opposé au pommeau 5 lorsque le levier 2 et la gâchette 6 occupent leur position de verrouillage de la marche arrière.

Sur le bord circulaire inférieur 17a, 18a de chaque gorge 17, 18 du levier 2 et définissant avec le bord circulaire supérieur 17b, 18b la largeur de la gorge 17, 18, est en butée l'organe d'amortissement correspondant 15, 16 sous l'action du moyen de rappel élastique 7 exercée sur le siège interne tronconique 19, 20 en appui sur l'organe d'amortissement 15, 16. Le bord circulaire inférieur 17a, 18a de la gorge 17, 18 a un diamètre supérieur au diamètre du bord circulaire supérieur 17b, 18b de cette gorge.

Ainsi, à la position de la gâchette 6 du levier de changement de vitesse 2 représentée aux figures 4 à 6 et à laquelle la gâchette 6 interdit l'accès à la ligne de sélection de marche arrière, le moyen de rappel élastique 7 assure le plaquage des sièges internes tronconiques 19, 20 des parties supérieure et inférieure de gâchette 8, 9 sur les deux organes d'amortissement 15, 16 et ce plaquage est toujours maintenu même dans le cas d'une manipulation du levier de changement de vitesse pour sélectionner et passer une vitesse autre que celle de la marche arrière. La forme tronconique des sièges internes 19, 20 des parties de gâchette supérieure 8 et inférieure 9 en coopération avec les organes d'amortissement 15, 16 réduit considérablement la transmission au levier 2 de vibrations.

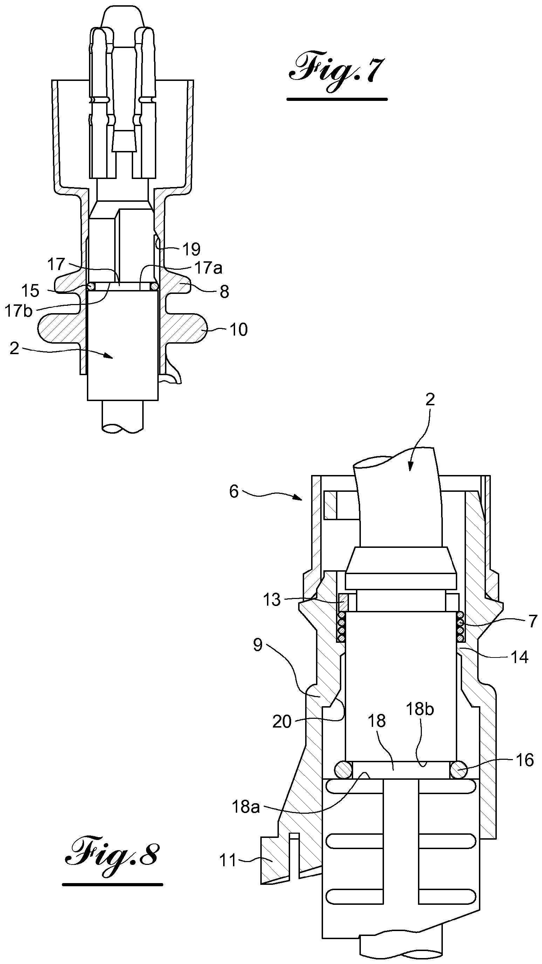

Les figures 7 et 8 représentent la situation selon laquelle la gâchette 6 a été soulevée pour autoriser l'accès à la ligne de sélection de marche arrière et montrent que le déplacement vers le haut de la gâchette 6 relativement au levier 2 a comprimé le moyen de rappel élastique 7 et les sièges internes tronconiques 19, 20 sont dégagés d'au-dessus des organes d'amortissement 15, 16. Lorsque le levier de changement de vitesse occupe la position d'engagement de la marche arrière, la saillie 11 de la partie de gâchette inférieure 9 est maintenue en appui sur la butée 12 par le moyen de rappel élastique 7 qui est détendu par rapport à sa position de la figure 8.

Pour désengager le levier 2 de sa position de marche arrière, la gâchette 6 est à nouveau soulevée vers le pommeau 5 à l'encontre de la force de rappel du moyen élastique 7 afin de dégager la saillie externe 11 d'au-dessus de la butée 12 puis le levier est déplacé vers sa position de point mort représentée en figure 1 avec relâchement de la gâchette 6. Lors du retour de la gâchette 6, les deux sièges internes tronconiques 19, 20 des parties de gâchette supérieure et inférieure 8, 9 viennent en appui, sous l'action du moyen de rappel élastique 7, respectivement sur les deux moyens d'amortissement 15, 16, qui garantissent ainsi l'absence de tout bruit et/ou de vibrations.

Le levier de changement de vitesse ci-dessus décrit de l'invention permet ainsi de quasiment supprimer les bruits et vibrations de la gâchette lors de son retour sur la butée et également lors de son retour pendant le déplacement du levier à sa position de verrouillage de la marche arrière. Le levier ainsi conçu permet également de supprimer les bruits et vibrations lors de sa manipulation pour effectuer des changements de vitesse autres que celle de la marche arrière.

## Revendications

1. Levier de changement de vitesse (2) pour un véhicule notamment automobile, comprenant un pommeau (5) à l'une de ses extrémités, une gâchette (6) de verrouillage de la marche arrière et au moins un organe (15;16) d'amortissement de bruit, la gâchette (6) étant solidaire du levier (2) en étant déplaçable en translation le long de celui-ci vers le pommeau (5) à l'encontre d'un moyen de rappel élastique (7), **caractérisé en ce que** la gâchette (6) comprend deux parties de gâchette (8,9) situées respectivement à proximité du pommeau (5) et à l'opposé de ce dernier, le levier (2) comprend, solidaires de celui-ci, deux organes (15,16) d'amortissement de bruit et de vibrations en forme de joints toriques et les deux parties de gâchette (8,9) comprennent deux sièges internes tronconiques (19,20) en appui, en position de repos de la gâchette (6), respectivement sur les deux organes d'amortissement (15,16) sous l'action du moyen de rappel élastique (7) de sens opposé au pommeau (5).

2. Dispositif pour la commande d'une boîte de vitesses d'un véhicule notamment automobile au moyen d'un levier (2) tel que défini dans la revendication 1,monté sur un support fixe (1), la gâchette (6) de verrouillage de la marche arrière pouvant être manoeuvrée à l'encontre du moyen de rappel élastique (7) pour autoriser le levier (2) à engager la marche arrière et l'organe (15;16) étant un organe d'amortissement de bruit notamment lors du retour du levier (2) et de la gâchette (6) à la position de verrouillage de la marche arrière, **caractérisé en ce que** la gâchette (6) est solidaire du levier (2) en étant déplaçable en translation le long de celui-ci vers le pommeau (5), à l'encontre du moyen de rappel élastique (7), de sa position de verrouillage de la marche arrière à sa position autorisant le levier (2) à engager la marche arrière, les deux parties de gâchette (8,9) étant situées respectivement à proximité du support fixe (1) et du pommeau (5), le levier (2) comprenant, solidaires de celui-ci, les deux organes (15,16) d'amortissement de bruit et de vibrations en forme de joints toriques et les deux sièges internes tronconiques (19,20) étant en appui respectivement sur les deux organes d'amortissement (15,16) sous l'action du moyen de rappel élastique (7) de sens opposé au pommeau (5) lorsque le levier (2) et la gâchette (6) occupent leur position de verrouillage de la marche arrière.

3. Dispositif selon la revendication 2, **caractérisé en ce que** chaque organe d'amortissement (15,16) est logé dans une gorge (17,18) du levier (2) en faisant radialement saillie de celle-ci.

4. Dispositif selon la revendication 3, **caractérisé en ce que** le bord circulaire (17a,18a) de chaque gorge (17,18) du levier (2), sur lequel est en butée l'organe d'amortissement correspondant (15,16) sous l'action du moyen de rappel (7) exercée sur le siège interne tronconique (19,20) en appui sur cet organe, a un diamètre supérieur au diamètre de l'autre bord circulaire (17b,18b) de la gorge (17,18).

5. Dispositif selon l'une des revendications 2 à 4, **caractérisé en ce que** le moyen de rappel élastique est un ressort hélicoïdal de compression (7) monté coaxialement sur le levier (2) en étant en appui précontraint entre le levier (2) et l'une (9) des deux parties de gâchette (8,9).

6. Dispositif selon la revendication 5, **caractérisé en ce que** le ressort hélicoïdal de compression (7) est logé dans la partie de gâchette (9) proche du support fixe (1).

7. Dispositif selon la revendication 6, **caractérisé en ce que** le ressort hélicoïdal de compression (7) est en appui précontraint entre une bague annulaire d'arrêt (13) solidaire du levier (2) et un épaulement interne (14) de la partie de gâchette (9) proche du support fixe (1).

8. Dispositif selon l'une des revendications 2 à 7, **caractérisé en ce que** la partie de gâchette (9) proche du support fixe (1) comprend, solidaire en translation de cette dernière, une saillie externe (11) venant en appui latéral sur une butée (12) solidaire du support fixe (1) pour interdire l'engagement de la marche arrière et qui peut être soulevée lors du déplacement en translation de la gâchette (6) vers le pommeau (5) et amenée en appui sur la butée (12) par déplacement du levier (2) pour permettre l'engagement de la marche arrière.

9. Véhicule automobile, **caractérisé en ce qu'**il est équipé d'un dispositif pour la commande d'une boîte de vitesses au moyen d'un levier (2) à pommeau (5) de changement de vitesse et tel que défini dans l'une quelconque des revendications 2 à 8.

## Patentansprüche

1. Getriebeschalthebel (2) für ein Fahrzeug, insbesondere Kraftfahrzeug, der einen Knauf (5) an einem seiner Enden, einen Drücker (6) zum Verriegeln des Rückwärtsgangs und mindestens ein Geräuschunterdrückungselement (15; 16) umfasst, wobei der Drücker (6) fest mit dem Hebel (2) verbunden und in Verschiebung entlang dieses zu dem Knauf (5) gegen ein elastisches Rückstellmittel (7) bewegbar ist, **dadurch gekennzeichnet, dass** der Drücker (6) zwei Drückerteile (8, 9) umfasst, die jeweils in der Nähe des Knaufs (5) und diesem Letzteren entgegengesetzt liegen, wobei der Hebel (2) fest mit ihm verbunden zwei Geräusch- und Schwingungsunterdrückungselemente (15, 16) in Form von O-Ringen umfasst, und dass die zwei Drückerteile (8, 9) zwei interne kegelstumpfförmige Sitze (19, 20), die in Ruheposition des Drückers (6) jeweils auf den zwei Unterdrückungselementen (15, 16) unter der Einwirkung des elastischen Rückstellmittels (7) mit Richtung zu dem Knauf (5) entgegengesetzt in Auflage sind, umfassen.

2. Vorrichtung zum Steuern eines Getriebes eines Fahrzeugs, insbesondere eines Kraftfahrzeugs, mit einem Hebel (2) wie in Anspruch 1 definiert, der auf einem stationären Träger (1) montiert ist, wobei der Drücker (6) zum Verriegeln des Rückwärtsgangs gegen das elastische Rückstellmittel (7) betätigt werden kann, um zu gestatten, dass der Hebel (2) den Rückwärtsgang einrückt, und wobei das Element (15; 16) ein Geräuschunterdrückungselement insbesondere bei der Rückkehr des Hebels (2) und des Drückers (6) zu der Verriegelungsposition des Rückwärtsgangs ist, **dadurch gekennzeichnet, dass** der Drücker (6) fest mit dem Hebel (2) verbunden und in Verschiebung entlang dieses zu dem Knauf (5) gegen das elastische Rückstellmittel (7) von seiner Position zum Verriegeln des Rückwärtsgangs zu seiner Position, die es dem Hebel (2) gestattet, den Rückwärtsgang einzurücken, bewegbar ist, wobei die zwei Drückerteile (8, 9) jeweils in der Nähe des stationären Trägers (1) und des Knaufs (5) liegen, wobei der Hebel (2) fest mit ihm verbunden die Geräusch- und Schwingungsunterdrückungselemente (15, 16) in Form von O-Ringen umfasst, und die zwei internen kegelstumpfförmigen Sitze (19, 20) unter der Einwirkung des elastischen Rückstellmittels (7) mit einer Richtung, die zu dem Knauf (5) entgegengesetzt ist, jeweils auf den zwei Unterdrückungselementen (15, 16) in Auflage sind, wenn der Hebel (2) und der Drücker (6) ihre Position zum Verriegeln des Rückwärtsgangs belegen.

3. Vorrichtung nach Anspruch 2, **dadurch gekennzeichnet, dass** jedes Unterdrückungselement (15, 16) in einer Hohlkehle (17, 18) des Hebels (2), radial von dieser vorstehend aufgenommen ist.

4. Vorrichtung nach Anspruch 3, **dadurch gekennzeichnet, dass** der kreisförmige Rand (17a, 18a) jeder Hohlkehle (17, 18) des Hebels (2), auf dem das entsprechende Unterdrückungselement (15, 16) unter der Einwirkung des Rückstellmittels (7), die auf den internen kegelstumpfförmigen Sitz (19, 20) in Auflage auf diesem Element ausgeübt wird, in Anschlag ist, einen Durchmesser hat, der größer ist als der Durchmesser des anderen kreisförmigen Rands (17b, 18b) der Hohlkehle (17, 18).

5. Vorrichtung nach einem der Ansprüche 2 bis 4, **dadurch gekennzeichnet, dass** das elastische Rückstellmittel eine Druckspiralfeder (7) ist, die koaxial auf dem Hebel (2) in vorgespannter Auflage zwischen dem Hebel (2) und einem (9) der zwei Drückerteile (8, 9) montiert ist.

6. Vorrichtung nach Anspruch 5, **dadurch gekennzeichnet, dass** die Druckspiralfeder (7) in dem Drückerteil (9), der dem stationären Träger (1) nahe ist, aufgenommen ist.

7. Vorrichtung nach Anspruch 6, **dadurch gekennzeichnet, dass** die Druckspiralfeder (7) in vorgespannter Auflage zwischen einem ringförmigen Anschlagring (13), der fest mit dem Hebel (2) verbunden ist, und einem internen Ansatz (14) des Drückerteils (9), der dem stationären Träger (1) nahe ist, ist.

8. Vorrichtung nach einem der Ansprüche 2 bis 7, **dadurch gekennzeichnet, dass** der Drückerteil (9), der dem stationären Träger (1) nahe ist, fest in Verschiebung mit diesem Letzteren verbunden einen externen Vorsprung (11) umfasst, der auf einem Anschlag (12), der mit dem stationären Träger (1) fest verbunden ist, zur seitlichen Auflage kommt, um das Einrücken des Rückwärtsgangs zu untersagen, und der bei dem Bewegen in Verschiebung des Drückers (6) zu dem Knauf (5) angehoben und zur Auflage auf dem Anschlag (12) durch Bewegen des Hebels (2) gebracht werden kann, um das Einrücken des Rückwärtsgangs zu erlauben.

9. Kraftfahrzeug, **dadurch gekennzeichnet, dass** es mit einer Vorrichtung zum Steuern eines Schaltgetriebes mittels eines Hebels (2) mit Knauf (5) zum Gangwechseln ausgestattet ist und wie in einem der Ansprüche 2 bis 8 definiert ist.

## Claims

1. A gear change lever (2) for a vehicle, in particular an automobile, including a knob (5) at one of its ends, a reverse gear locking trigger (6) and at least one noise reduction member (15; 16), the trigger (6) being integral with the lever (2), being movable in translation along the latter towards the knob (5) counter to an elastic return means (7), **characterized in that** the trigger (6) includes two trigger parts (8, 9) situated respectively close to the knob (5) and opposite the latter, the lever (2) includes, integral with the latter, two noise and vibration reduction members (15, 16) in the form of O-rings, and the two trigger parts (8, 9) include two internal frustoconical seats (19, 20) resting, in position of rest of the trigger (6), respectively on the two noise reduction members (15, 16) under the action of the elastic return means (7) of opposite direction to the knob (5).

2. A device for controlling a gearbox of a vehicle, in particular an automobile, by means of a lever (2) such as defined in Claim 1, mounted on a fixed support (1), the reverse gear locking trigger (6) being able to be manoeuvred counter to the elastic return means (7) to allow the lever (2) to engage the reverse gear, and the member (15; 16) being a noise reduction member in particular during the return of the lever (2) and of the trigger (6) to the reverse gear locking position, **characterized in that** the trigger (6) is integral with the lever (2), being movable in translation along the latter towards the knob (5), counter to the elastic return means (7), from its reverse gear locking position to its position allowing the lever (2) to engage the reverse gear, the two trigger parts (8, 9) being situated respectively close to the fixed support (1) and to the knob (5), the lever (2) including, integral with the latter, the two noise and vibration reduction members (15, 16) in the form of O-rings and the two internal frustoconical seats (19, 20) resting respectively on the two noise reduction members (15, 16) under the action of the elastic return means (7) of opposite direction to the knob (5) when the lever (2) and the trigger (6) occupy their locking position of the reverse gear.

3. The device according to Claim 2, **characterized in that** each noise reduction member (15, 16) is housed in a groove (17, 18) of the lever (2), projecting radially therefrom.

4. The device according to Claim 3, **characterized in that** the circular edge (17a, 17b) of each groove (17, 18) of the lever (2), on which the corresponding noise reduction member (15, 16) is in abutment under the action of the return means (7) exerted on the internal frustoconical seat (19, 20) resting on this member, has a diameter greater than the diameter of the other circular edge (17b, 18b) of the groove (17, 18).

5. The device according to one of Claims 2 to 4, **characterized in that** the elastic return means is a helicoidal compression spring (7) mounted coaxially on the lever (2), resting in a prestressed manner between the lever (2) and one (9) of the two trigger parts (8, 9) .

6. The device according to Claim 5, **characterized in that** the helicoidal compression spring (7) is housed in the trigger part (9) close to the fixed support (1).

7. The device according to Claim 6, **characterized in that** the helicoidal compression spring (7) rests in a prestressed manner between an annular stop ring (13) integral with the lever (2) and an internal shoulder (14) of the trigger part (9) close to the fixed support (1).

8. The device according to one of Claims 2 to 7, **characterized in that** the trigger part (9) close to the fixed support (1) includes, integral in translation with the latter, an external projection (11) coming to rest laterally on an abutment (12) integral with the fixed support (1) to prevent the engagement of the reverse gear and which can be raised during the movement in translation of the trigger (6) towards the knob (5) and brought to rest on the abutment (12) by movement of the lever (2) to allow the engagement of the reverse gear.

9. A motor vehicle, **characterized in that** it is equipped with a device for controlling a gearbox by means of a lever (2) with knob (5) for changing gear and as defined in any one of Claims 2 to 8.
